# EUROPEAN PATENT SPECIFICATION

(11) **EP 1 592 485 B1**
(45) Date of publication and mention of the grant of the patent: **07.03.2007**
(21) Application number: 04705464.8
(22) Date of filing: 27.01.2004
(51) Int. Cl.: A63B 71/06

(54) **System and method for assisting referees**
System und Methode zur Unterstützung von Schiedsrichtern
Système et procédé d'aide aux arbitres

(30) Priority: 11.02.2003 HU 0300351
(43) Date of publication of application: 09.11.2005
(73) Proprietor: Maruzsi, Laszlo, 1158 Budapest (HU)
(72) Inventor: Maruzsi, Laszlo, 1158 Budapest (HU)
(74) Representative: Pintz, György
(86) International application number: PCT/HU2004/000010
(87) International publication number: WO 2004/071598

(56) References cited:
- EP-A- 1 199 089
- FR-A- 2 726 370
- FR-A- 2 753 633
- US-A- 5 745 029
- US-A- 6 067 013
- US-A1- 2002 030 742

## Description

The object of the invention is a system for assisting referees, especially for assisting football linesmen. The object of the invention is a method as well, in which the field is watched by one or more camera units, and the information gained is forwarded to a linesman's flag suitable for communication via a transceiver unit.

The activity of referees has always been in the limelight, especially with so popular sports as football. Sometimes one single decision of the referee affects million's mood, having sometimes an affect on politics and the economic situation of the clubs as well. It is enough to remember some matches of the world championship 2002 to realize that the result of a match may depend on the bias, the disposition and the concentration of the referee. The activity of the referees can subsequently be analyzed on the TV. However, the referee is not in possession of this technical means during the match, and also, the referee depends on his linesmen, and on his own divided attention. It is especially difficult for the referee to judge the "lines", e.g. the goal-line, the touch-line, and the offside, where the referee or the linesman must be right there at the line to be able to make an unambiguous decision. Also, it requires significant physical efforts from the referee and the linesmen as well.

This is the reason why several solutions have been suggested in order to make refereeing more definite. Hungarian specification P-98-01379 presents an offside-indicating electronic system based on a colour camera. To apply this solution, one team must wear blue, the other must wear red dress. The other team should not wear, and the environment should not contain the red or blue colour of the other team. The specification gives no further description of the method. This suggestion conflicts the traditional dressing conventions of teams.

The method presented by FR. 2.726.370 can use a camera similarly to the previous solution, and the data are inputted into a computer which stores and analyses the data. There is a radio transmitter in the ball and on the players. The 3D position of the players and the ball is determined by three radio receivers. The disadvantage of this solution is that the radio transmitter may be shielded by the players, and the radio transmitter in the ball can easily go wrong. The method presented in specification ES 2.096.525 contains two cranes projecting above the field, including a referee's cabin, TV cameras, speakers and signalling devices. This solution is a bit utopian.

The linesman system EP 1.199.089 makes the job of the linesmen easier. The referee and the linesman signals in case of passing the ball or in case if the ball leaves the field. The method presented in FR 2.753.633 checks the position of the ball and the players permanently, in every 10 msec. The data are forwarded to a computer by a radio transmitter and the system.

Specification DE 31 20 584 describes a signalling device built in a flag, containing a radio transmitter as well. The linesman pushes a button on it, which generates a sound signal for the referee. Upon the sound signal, the referee runs out to the linesman to have a consultation. US 5,745,029 is a similar method, however, the signal also informs the referee about which linesman has signalled and what the problem is. The referee and the linesmen can also talk with each other through the radio. Further, the pieces of information collected by the referee can also be forwarded to a computer.

The device presented in EP 0 678 837 makes it possible for the referee and the linesmen to signal the beginning, the duration and the end of an event for each other. The devices are built in the flags and can communicate on two independent channels. The conventional flags were only suitable for simple signalling, there was no possibility for sending more detailed messages. The signal is sent by one of the linesmen to the referee or the other linesman. The first linesman throws up the flag, which, in turn, will give a vibrating signal to the other linesman or the referee during a certain event "A". The other linesman or the referee must only observe if event "B" took place before, during, or after the vibrating signal. This makes it easier to make decisions on events taking place in one line (e.g. offside).

None of the above methods have become common in practice. The object of the invention is to provide a system that helps making unambiguous decisions on touch-lines, goal lines, offsides and goals, reducing the distance to be run by the referee, while the referee is not burdened by any device. This way the referee could pay much more attention on other events. It is also an object that the system should be relatively unnoticeable, and should not require taking up new practices.

The basic concept of the invention is that if we make the measures presented in the principal claim, we can get a solution better than the previous ones.

The system according to the invention provides a solution for the proposed object as set forth in claim 1. The method according to the invention provides a solution for the proposed object as set forth in claim 11. The characterizing features are included in the subclaims.

The most general embodiment of the system comprises a field, a linesman's flag, a processing unit, an antenna, a camera unit, a linesman's flag pole unit, a radio transceiver unit and a power supply, and is designed in a way that the processing unit represents the field as a grid by means of an image processing software and the camera unit, the representation data comprise digitalized, preferably modified signal clusters corresponding to the position of the players and the ball on the field and belonging to a given segment of the grid, the processing unit is in connection with the pole unit via the radio transceiver unit suitable for forwarding the digitalized signal clusters in coded form, and the pole unit is supplied with a goal indicating lamp and an offside indicating lamp, and further, the pole unit comprises a preferably motor-operated mechanical and/or pneumatic signalling unit suitable for signalling if the lamps flare up.

In what follows, the invention is described in more detail based on examples, with reference to the accompanying drawings where:
Figure 1 is the scheme of the system,
Figure 2 is the top view of the linesman's flag,
Figure 3 is the side view of the linesman's flag,
Figure 4 is a longitudinal section of the grip,
Figure 5 is a cross-sectional view of the grip.

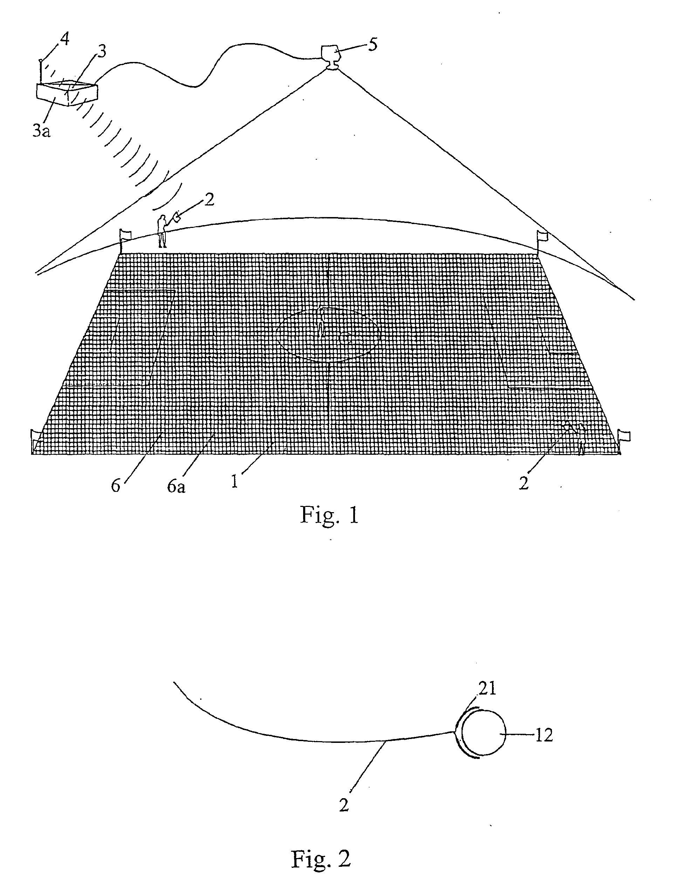

Figure 1 shows the processing unit 3 comprising a transceiver unit and a computer 3a, the antenna 4, the camera unit 5, the field 1, and the linesman's flag 2. In figure 1, there is a single camera unit 5 situated above the field 1, however, it is viable only in few cases, therefore in most cases there are two camera units 5 e.g. above the goals. The image processing software running on the computer 3a divides the field 1 into segments 6a, which segments together form the quadratic grid 6.

The camera units 5 are video cameras with charge coupled devices (CCD). In case of applying more than one camera unit 5 the different sensitivity of the cameras must also be taken into account, that is, the image processing software must provide for the equalization. Digitalization of the signals can be controlled by the computer 3a, the digitalized image is usually stored in the memory of the card. This image can be read and modified by the computer 3 a.

The purpose of processing the images containing the events of the football match is to understand the image by filtering out the unnecessary information and analyzing the essential information, that is, to provide an automatization of vision. The picture elements containing essential information are considered as substantial, and are detached from the other parts of the picture. The essential information is not carried by the single pixels, but by certain groups of the pixels. We assign characteristic features to these groups, which are not owned by the single pixels. The segments 6a are classified according to these characteristics, and are separated from the other segments 6a.

The image processing software has the following basic features: it can filter out the errors of the optics, it converts the picture to improve its quality, it filters out accidental bright spots, it corrects the distortions of the edges of the image, it divides the picture into independent parts, it analyses and classifies the properties of the pixels and the segmented patterns composed by the conjugate pixels, it recognises the image in order to reduce the data set to be processed, it associates the images of the segments 6a to the properties stored in its database, and it compares the images of the segments 6a to the previous images at certain time intervals. The database of the computer 3a contains the facts, data, known relations and conclusions relating to the controlling of the match. These pieces of information are stored in symbolic form, and the problem-solving is performed via manipulations with the symbols.

The processing unit 3 controls the position of the players and the ball with the aid of the camera unit 5. With the latest touching of the ball taken into account, it concludes on regular course of the match, leaving the field, goals and offsides. The processed data are forwarded to the radio transceiver unit 13 of the linesman's flag 2 by the radio transceiver of the processing unit 3 through the antenna 4. Safe communication between the processing unit 3 and the linesman's flag 2 is supported by coder and decoder software.

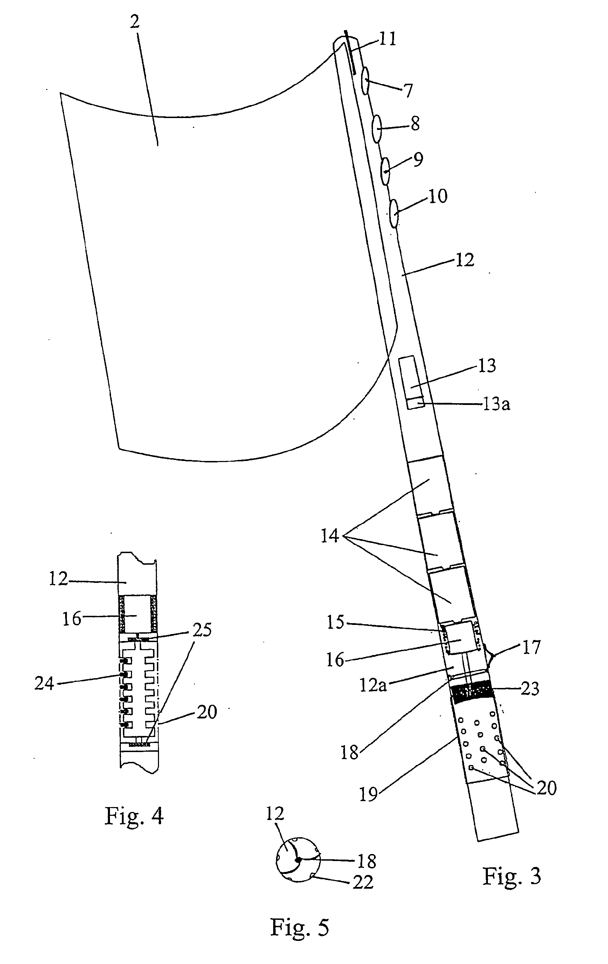

Figure 2 shows the linesman's flag 2 fixed to the pole unit 12 by a hook and loop fastener 21. Figure 3 shows the linesman's flag 2, the goal indicating lamp 7, the field indicating lamp 8, the offside indicating lamp 9, the control lamp 10, the bar antenna 11, the pole unit 12 with the grip 12a, the transceiver unit 13 with the sound warning unit 13a, the power supply 14-preferably one or more batteries -, the balls 15, the motor 16, the switch 17, the rotating disc 18, the cover 19, the signalling holes 20 and the piston 23. In figure 3, we have indicated several mechanic and pneumatic signalling possibilities. There is no need for applying them simultaneously, however, such an embodiment is also possible. The power supply 14 can also be operated by a solar cell. There may be an acoustic signal if the batteries are running down. The pole unit 12 may be made of light-weight Kevlar, its weight does not significantly differ from that of the presently used linesman's flags. The lamp can be any kind of light source, e.g. LED display.

The longitudinal section shown in figure 4 is a possible embodiment of the pole unit 12 with mechanical signalling. There are excentric rolls 24 on the axis of the motor 16 between bearings 25, and by turning around, they signal the events to the linesman through the signalling holes 20. Instead of the rolls 24, the axis of the motor 16 itself may be of excentric design. Figure 5 shows another design for mechanical signalling in cross sectional view. In this case a flexible rotating disc 18, similar to a clicker, hits against the knobs 22 formed in the pole unit 12, which stimulates the hand of the linesman. The hand of the linesman can also be stimulated by the balls 15 shown in figure 3 transmitting the oscillations of the motor 16. The oscillations can be generated not only by a motor, but e.g. by an electromagnet as well. Figure 3 illustrates a pneumatic construction as well, where the piston 23 performs compressing, pulsating movement. Due to this increase of pressure, the weakened parts of the cover 19 at the signalling holes 20 are knobbing out. The mechanical and/or pneumatic signals can be accompanied by acoustic signal emitted by the sound warning unit 13a.

As an example, the system according to the invention operates as follows: when the ball fully leaves the play-field, the mechanic part of the pole unit 12 provides mechanic signals for the linesman for 3 seconds. At the same time, the field indicating lamp 8 of the lamps on the pole unit 12 will permanently light in red for 3 seconds as well.

If the ball fully leaves the play field at the goal line, than the green goal indicating lamp will light besides providing the mechanical signal.

In case of unambiguous offside situation, the linesman would sign the offside in the usual way, while if clearly there is no offside situation, naturally he would not sign. However, in case if there is only a slight doubt if there was offside or not, he must push the easily accessible button of the switch 17 positioned near his thumb. If the processing unit 3 records offside situation at the moment of shooting the ball, it forwards a radio signal to the pole unit 12. If the linesman presses the switch 17, he will receive a mechanic signal. At the same time, the offside indicating lamp 9 of the lamps will light in yellow for 3 seconds as well. If there is no signal upon pressing the button, there is of course no offside situation, and the game is automatically going on. The control lamp 10 blinking blue on the pole unit 12 indicates proper operation of the system. The linesman also has the opportunity to inquire the last signal again in 8 seconds by pushing the switch 17 with his thumb. In this case the indicating lamps repeat the last piece of information. This is especially useful in case of offside goal, when two lamps are lit at the same time.

At a preferred embodiment of the system there are at least three digital cameras 5 at each half. The cameras 5 are positioned on vibrationless mobile columns designed especially for this purpose. The images of each camera 5 are processed by separate client computers for the central processing unit 3. Only the data important from the evaluation point of view are sent to the processing unit 3 (server). The basis of the operation system of the computer background is UNIX, the POSIX-based standard memory-management of which is suitable for real-time data processing. The 720 x 576 pixel resolution of PAL television standard allows position determination of centimetre accuracy. In order to improve security of the data, the digital data stream is encrypted and provided with error-correcting code. Video compression is decoded by a special purpose codec chip so as to spare the CPU of the processing unit 3. Video format MPEG2 is used for compression. E.g. a fixed-camera recording from the homogeneous grassy area of a football field allows remarkable, e.g. 1:100 compression of the data. This way the picture information is suitable for being forwarded to a remote central place e.g. via satellites or Internet.

Also, the system provides solutions for special situations as well. Such a situation is passive offside in football. If the linesman queries the system in a possible offside situation, the pole unit 12 provides partial mechanical signal indicating that data processing is in progress. The offside indicating lamp 9 does not signal at this time. When it becomes clear if it is a real offside or just passive offside, the system signals (that is, the offside indicating lamp 9 is lit) or does not signal, respectively.

The system and method according to the invention has a plenty of advantages. The system helps to judge goal-lines, touch-lines and offside. The linesman does not need to be in one line with the players, the signals are received irrespective of his position. The processing unit 3 records each signal forwarded and received. The referee is not burdened by any device. The system makes corruption impossible, and even the assumption of corruption can be excluded. The referees could make fair judgements instead of unnecessary provocation of the players and the spectators. The referee can follow the events with shorter distance to run, he should move only between the penalty areas. The referee should only focus on other events of the match to be judged as he could rely on the signals of the linesmen. This way the referee should nearly never need to revise the signals of the linesmen. As a result, there could be a permanent confidence between the referee and the linesmen. The system is open, so the software can be improved by adding further functions to it. It is also advantageous that the system is relatively unnoticeable, and does not require taking up new practices, so it can become widespread easier than the previous solutions.

Other embodiments and processes for the method are also possible within the scope of the invention. The examples presented are for the purpose of illustration only, and not for restricting the invention to the examples. The invention can be utilised in other sports as well, e.g. in tennis, athletics, hand-ball, basket-ball, shooting competition or field-hockey.

The system and method according to the invention has industrial applicability, and it makes it possible to provide the linesmen with information and to assist the referee in sport games.

## Claims

1. System for assisting referees, especially to inform linesmen in football games, comprising a field (1), a processing unit (3), an antenna (4), a camera unit (5), a linesman's flag (2) comprising a pole unit (12), a radio transceiver unit (13) and a power supply (14), **characterized in that** the processing unit (3) represents the field (1) as a grid (6) by means of an image processing software and the camera unit (5), the representation data comprise digitalized signal clusters corresponding to the position of the players and the ball on the field (1) and belonging to a given segment (6a) of the grid (6), the processing unit (3) is in connection with the pole unit (12) via the radio transceiver unit (13) suitable for forwarding the digitalized signal clusters in coded form, and the pole unit (12) is supplied with a goal indicating lamp (7), a field indicating lamp (8) and an offside indicating lamp (9), and further, the pole unit (12) comprises a motor (16) operated mechanical and/or pneumatic signalling unit (15, 18, 20, 24) suitable for signalling if the lamps (7, 8, 9) flare up.

2. System according to claim 1, **characterized in that** there are flexible rotating discs (18) on the axis of the motor (16), which rotating discs (18) hit against the knob (22) formed on the grip (12a) of the pole unit (12) or against the signalling holes (20) formed on the cover (19) of the grip (12a).

3. System according to claim 1, **characterized in that** there are excentric rolls (24) on the axis of the motor (16), which excentric rolls (24) hit against the signalling holes (20) formed on the cover (19) of the grip (12a).

4. System according to claim 1, **characterized in that** there are balls (15) situated around the motor (16), suitable for transmitting oscillations.

5. System according to claim 1, **characterized in that** there is a piston (23) connected to the motor (16), and the signalling holes (20) formed on the cover (19) of the grip (12a) are knobbing out in case of air-compression.

6. System according to any of claim 1 - 5, **characterized in that** the pole unit (12) is supplied with a switch (17) suitable for initiating repetition of the last signal.

7. System according to any of claims 1 - 6, **characterized in that** the pole unit (12) is supplied with a control lamp (10) for indicating the operation of the system.

8. System according to any of claims 1 - 7, **characterized in that** the transceiver unit (13) is supplied with a sound warning unit (13a).

9. System according to any of claims 1 - 8, **characterized in that** the linesman's flag (2) is fixed to the pole unit (12) by a hook and loop fastener 21.

10. System according to any of claims 1 - 9, **characterized in that** the processing unit (3) comprises a computer (3a), and the computer (3a) is supplied with memory suitable for archiving the data.

11. Method for realizing system as specified in claim 1 for assisting referees, especially to inform linesmen in football games, in the course of which the field is watched by one or more camera units, and the information gained is forwarded to a linesman's flag suitable for communication via a transceiver unit, **characterized in that** the image of the field (1) is represented as a grid (6) by means of an image processing software and the camera unit (5), the representation data are converted into digitalized signal clusters corresponding to the position of the players and the ball on the field (1) and belonging to a given segment (6a) of the grid (6), the digitalized signal clusters are forwarded to the pole unit (12) preferably in coded form, and the mechanical and/or pneumatic signalling unit (15, 18, 20, 24) and one of the goal indicating lamp (7), the field indicating lamp (8) and the offside indicating lamp (9) is operated for 1 - 15 seconds, preferably for 3 seconds.

12. Method according to claim 11 **characterized in that** the indication of an offside and/or the last signal is inquired by pushing the switch 17 on the pole unit (12).

## Patentansprüche

1. System zur Unterstützung von Schiedsrichtern, besonders zur Information der Fußballlinienrichter, welches Fußballplatz (1), Bearbeitungseinheit (3), Antenne (4), Kameraeinheit (5), Linienrichterflagge (2), Stangeneinheit (12), Sendeempfangseinheit (13) und Stromquelle (14) enthält, **dadurch gekennzeichnet, dass** der Fußballplatz (1) durch die Bearbeitungseinheit (3) und die Kameraeinheit (5) der Bildbearbeitungssoftware als gitterförmiges Netz (6) dargestellt wird; die dargestellten Daten bestehen aus digitalisierten Signalgruppen, die der Lage der auf dem Fußballplatz (1) anwesenden Spieler und des Balles entsprechen, bzw. zu den betreffenden Netzsegmenten (6a) des Netzes (6) gehören die Bearbeitungseinheit (3) ist mit einer Stangeneinheit (12) verbunden, die zur kodierten Übertragung der digitalisierten Signalgruppen auf dem Wege einer Sendeempfangseinheit (13) geeignet, die Stangeneinheit (12) verfügt über eine Tor anzeigende Lampe (7), eine Fußballplatz anzeigende Lampe (8) und eine Abseits anzeigende Lampe (9), weiterhin dient die Stangeneinheit (12) zum Anzeigen des Aufleuchtens der Lampen (7, 8, 9), sie beinhaltet zweckentsprechend ein mit einem Motor (16) versehenes mechanisches und/oder pneumatisches Anzeigesystem (15, 18, 20, 24).

2. System nach Anspruch 1, **dadurch gekennzeichnet, dass** auf die Welle des Motors (16) Drehplatten (18) aufgesteckt sind, die an die sich am Stiel (12a) der Stangeneinheit (12) befindende Wulst (22) oder an die sich an der Verkleidung (19) des Stiels (12a) befindenden Anzeigelöcher (20) anstoßen.

3. System nach Anspruch 1, **dadurch gekennzeichnet, dass** sich an der Welle des Motors (16) exzentrische Rollen (24) befinden, die an die sich an der Verkleidung (19) des Stiels (12a) befindenden Anzeigelöcher (20) anstoßen.

4. System nach Anspruch 1, **dadurch gekennzeichnet, dass** sich um den Motor (16) Kugeln (15) befinden, die zur Übergabe von Schwingungen geeignet sind.

5. System nach Anspruch 1, **dadurch gekennzeichnet, dass** sich ein Kolben (23) mit dem Motor (16) verknüpft, und die sich an der Verkleidung (19) des Stiels (12a) befindenden Anzeigelöcher (20) schwellen bei Luftkompression hervor.

6. System nach einem der Ansprüche 1-5, **dadurch gekennzeichnet, dass** die Stangeneinheit (12) mit einem Schalter (17) versehen ist, der geeignet ist, die Wiederholung des letzten Signals anzuregen.

7. System nach einem der Ansprüche 1-6, **dadurch gekennzeichnet, dass** die Stangeneinheit (12) mit einer Kontrolllampe (10) ergänzt ist, die die Funktion des Systems zeigt.

8. System nach einem der Ansprüche 1-7, **dadurch gekennzeichnet, dass** die Sendeempfangseinheit (13) mit einem akustischen Signalorgan (13a) ergänzt ist.

9. System nach einem der Ansprüche 1-8, **dadurch gekennzeichnet, dass** die Linienrichterflagge (2) mit Klettenverschluss (21) an der Stangeneinheit (12) befestigt ist.

10. System nach einem der Ansprüche 1-9, **dadurch gekennzeichnet, dass** die Bearbeitungseinheit (3) aus einem Rechner (3a) besteht, und der Rechner (3a) verfügt über einen Speicher, der geeignet ist, die Daten zu archivieren.

11. Method zur Unterstützung von Schiedsrichtern laut Anspruch 1, besonders zur Information der Fußballlinienrichter, bei dem der Fußballplatz mit einer oder mehreren Kameras beobachtet wird, die gewonnenen Informationen werden durch die Sendeempfangseinheit an die kommunikationsfähige Linienrichterflagge übertragen, **dadurch gekennzeichnet dass** das Bild des Fußballplatzes (1) mit Hilfe der Bildbearbeitungssoftware und der Kameraeinheit (5) auf ein Gitternetz (6) aufgelöst wird, die dargestellten Daten werden zu digitalisierten Signalgruppen umgewandelt, die der Lage der auf dem Fußballplatz (1) anwesenden Spieler und des Balles entsprechen, bzw. zu den betreffenden Netzsegmenten (6a) des Netzes (6) gehören, die digitalisierten Signalgruppen werden in einer zweckmäßig kodierten Form auf die Stangeneinheit (12) übertragen, und das mechanische und/oder pneumatische Anzeigesystem (15, 18, 20, 24), weiterhin leuchtet eine von den Tor anzeigenden (7), den Fußballplatz anzeigenden (8) und der Abseits anzeigenden Lampen (9) auf 1 - 15 Sekunden (vorteilhaft auf drei Sekunden) auf.

12. Method nach Anspruch 1, **dadurch gekennzeichnet, dass** der Schalter (17) an der Stangeneinheit (12) zur Abfrage der Abseitsanzeige und /oder der letzten Signalanzeige gedrückt wird.

## Revendications

1. Système d'aide aux arbitres, particulièrement pour l'information des juges de touche de football ce système contenant un terrain (1), une unité de traitement (3), une antenne (4), une unité de caméra (5) et un drapeau de juge de touche (2) ce dernier comprenant une unité de barre (12), une unité émetteur-récepteur (13) et une alimentation électrique (14), **caractérisé en ce que** l'unité de traitement (3) visualise le terrain (1), par le biais du logiciel de traitement d'image et de l'unité de caméra (5), sous la forme d'une grille (6), les données de la visualisation étant constituées par des ensembles de signaux numérisés correspondant à la position des joueurs et du ballon sur le terrain (1), et par des ensembles de signaux numérisés attribués au segment donné (6a) de la grille (6), et que l'unité de traitement (3) est reliée, par le biais de l'unité émetteur-récepteur (13), capable de la transmission codée des ensembles de signaux numérisés, à l'unité de barre (12), laquelle unité de barre (12) dispose d'un indicateur lumineux de but (7), d'un indicateur lumineux de terrain de jeu (8) et d'un indicateur lumineux de hors-jeu (9), cette unité de barre (12) comprend également un organe d'alerte (15, 18, 20, 24) méchanique et/ou pneumatique capable de donner des signaux d'alerte lors de l'allumage des indicateurs lumineux (7, 8, 9), cet organe pouvant être équipé opportunément d'un moteur (16).

2. Système selon la revendication 1, **caractérisé en ce que** l'axe du moteur (16) est muni de plaques souples pivotantes (18) se heurtant contre le bossage (22) emplacé sur la poignée (12a) de l'unité de barre (12) ou contre les trous d'alerte (20) emplacés sur le doublage (19) de la poignée (12a).

3. Système selon la revendication 1, **caractérisé en ce que** l'axe du moteur (16) est muni de roulettes excentriques (24) se heurtant contre les trous d'alerte (20) emplacés sur le doublage (19) de la poignée (12a).

4. Système selon la revendication 1, **caractérisé en ce que** le moteur (16) est entouré de billes (15) capables de transmettre les vibrations.

5. Système selon la revendication 1, **caractérisé en ce que** le moteur (16) est associé à un piston (23), et que les trous d'alerte (20) emplacés sur le doublage (19) de la poignée (12a) se renflent en cas de compression d'air.

6. Système selon l'une quelconque des revendications 1 à 5, **caractérisé en ce que** l'unité de barre (12) est équipée d'une commande (17) capable de reproduire la dernière alerte.

7. Système selon l'une quelconque des revendications 1 à 6, **caractérisé en ce que** l'unité de barre (12) est complétée d'un témoin de fonctionnement du système (10).

8. Système selon l'une quelconque des revendications 1 à 7, **caractérisé en ce que** l'unité émetteur-récepteur (13) est complétée d'un organe d'alerte acoustique (13a).

9. Système selon l'une quelconque des revendications 1 à 8, **caractérisé en ce que** le drapeau de juge de touche (2) est fixé à l'unité de barre (12) à l'aide d'un velcro (21).

10. Système selon l'une quelconque des revendications 1 à 9, **caractérisé en ce que** l'unité de traitement (3) est constitué par un ordinateur (3a), cet ordinateur (3a) disposant d'une mémoire permettant l'archivage des données.

11. Procédé d'aide aux arbitres selon la revendication 1, particulièrement pour l'information des juges de touche de football, qui consiste à surveiller le terrain de jeu par une ou plusieurs unité(s) de caméra, à transmettre l'information acquise, au moyen d'une unité émetteur-récepteur, au drapeau de juge de touche apte à la communication, **caractérisé en ce que** l'image du terrain (1) est répartie, à l'aide du logiciel de traitement d'image et de l'unité de caméra (5), en une grille (6), et que les données de la visualisation sont transformées en des ensembles de signaux numérisés correspondant à la position des joueurs et du ballon sur le terrain (1), et en des ensembles de signaux numérisés attribués au segment donné (6a) de la grille (1), ces ensembles de signaux numérisés étant ensuite transmis, avantageusement sous forme codée, à l'unité de barre (12), et que l'organe d'alerte (15, 18, 20, 24) méchanique et/ou pneumatique, ainsi que l'indicateur lumineux de but (7), ou l'indicateur lumineux de terrain de jeu (8) ou l'indicateur lumineux de hors-jeu (9) sont mis en marche pour 1 à 15 secondes, avantageusement pour trois secondes.

12. Procédé selon la revendication 11, **caractérisé en ce que** le requêtage de l'alerte hors-jeu et/ou celui de la dernière alerte est possible par l'appui sur la commande (17) intégrée à l'unité de barre (12).
